# EUROPEAN PATENT SPECIFICATION

(11) **EP 1 447 259 B1**
(45) Date of publication and mention of the grant of the patent: **30.03.2011**
(21) Application number: 04003284.9
(22) Date of filing: 13.02.2004
(51) Int. Cl.: F16H 63/50

(54) **Power control apparatus and power control method for internal combustion engines**
Leistungssteuerungsvorrichtung und -verfahren für Verbrennungsmotoren
Dispositif et procédé de commande de la puissance de moteurs à combustion interne

(30) Priority: 14.02.2003 JP 2003037097
(43) Date of publication of application: 18.08.2004
(73) Proprietor: Toyota Jidosha Kabushiki Kaisha, Toyota-shi, Aichi-ken, 471-8571 (JP)
(72) Inventor: Kawai, Katsuyuki, Toyota-shi Aichi-ken 471-8571 (JP)
(74) Representative: TBK-Patent

(56) References cited:
- EP-A- 0 037 639
- EP-A- 1 223 070
- DE-A1- 4 028 809
- DE-A1- 19 611 839
- DE-A1- 19 950 664
- GB-A- 2 314 172

## Description

The present invention relates to a power control apparatus and a power control method for an internal combustion engine.

In a vehicle such as an automobile, which has an internal combustion engine as its prime mover, a transmission is provided on the path of transmission of rotation from the engine to wheels, and the rotation speed ratio (transmission gear ratio) between the internal combustion engine and the wheels is changed by shifting up or down the transmission. While a gap arises between the speed of engine rotation and the input rotation speed of the transmission when the transmission is being shifted, a torque converter, for instance, is provided between the internal combustion engine and the transmission so that rotation can be transmitted from the former to the latter without being affected by that speed difference between them. This torque converter performs the transmission of rotations from the internal combustion engine and the transmission via a fluid (hydraulic oil) to ensure smooth transmission of rotation even when a speed difference occurs between them.

Various power demands are made of an internal combustion engine, and power control is executed to provide an power meeting each of such demands. Power demands which would be made of an internal combustion engine include, but not limited to, the following examples.

A power demand made by the automobile driver's accelerator pedaling: The power so required increases with the amount of the accelerator pedaling.

### An power demand made when the transmission is shifted:

The power so required is increased or decreased along with the shifting of the transmission to ensure a smooth speed change.

An power demand made when the engine power is to be controlled to restrain skidding due to the driver's abrupt steering or on a slippery road surface, i.e. an power demand in connection with so-called VSC control: The power so required is increased or decreased according to the state of the vehicle and other factors to transmit as much of the motive power to the road surface while suppressing the skidding.

The power control of an internal combustion engine is accomplished, for instance, by using power demand values corresponding to different power demands (hereinafter referred to as normal power control). The power demand values used in this normal power control are set for each item of various power demands, and there are two different kinds of them: power demand values for raising the power and power demand values for reducing the power. The maximum of the various power demand values for raising the power and the minimum of the various power demand values for reducing the power are figured out, and the lower of those maximum and minimum is set as the target power of the engine. Power control of an internal combustion engine is carried out to achieve this target power.

Power demand values for raising the power corresponding to different power demands in the power raising direction are set to predetermined low values unless there is any power demand in the power raising direction or, if there is any power demand in the power raising direction, set to a higher value matching that demand. Also, values for reducing the power corresponding to different power demands in the power reducing direction are set to predetermined higher values unless there is any power demand in the power reducing direction or, if there is any power demand in the power reducing direction, set to a lower value matching that demand.

Therefore, if there is no demand for raising the power but there are various demands for reducing the power, the target power, which is the lower of the maximum of power demand values for raising the power and the minimum of power demand values for reducing the power, takes on a low value, and the engine power is reduced under power control based on that target power. Even if here comes a demand for a power increase and the power demand value for raising the power corresponding to this demand is high, if there is at least one demand for reducing the power the target power set as described above will remain low, and priority will be given to the power control based on the demand for reducing the power. Therefore, when there are various demands for reducing the power, any trouble which might result from an attempt to raise the engine power on the basis of the demand for raising the power can be restrained.

Conversely, if there is no demand for reducing the power but there are various demands for raising the power, the target power, which is the smaller of the maximum of power demand values for raising the power and the minimum of power demand values for reducing the power takes on a high value, and the engine power is raised under power control based on that target power. If here comes a demand for an power decrease and at least one of the power demand values for reducing the power takes on a low value, the target power set as described above will be altered to a lower value, and priority will be given to the power control based on the demand for reducing the power. As a result, when a demand for an power decrease is made in a state in which the engine power is increased in accordance with various demands for raising the power, the engine power is reduced appropriately. Therefore, any trouble which might result from an attempt to raise the engine power when a demand for reducing the power is made can be restrained.

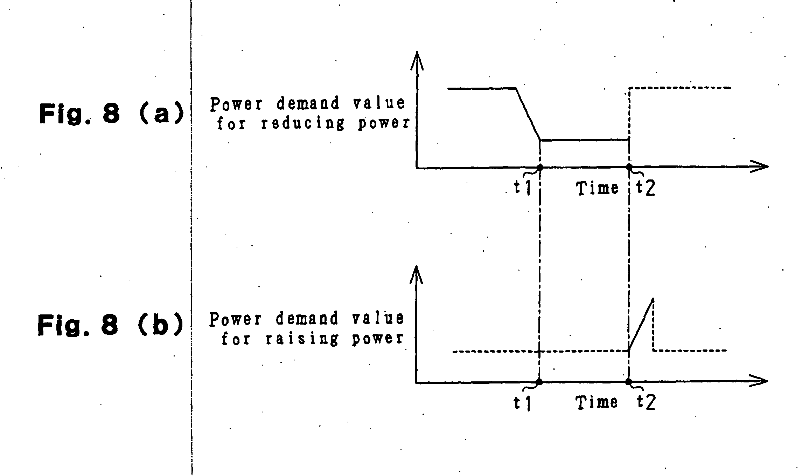

Next will be described with reference to the time chart of FIG. 8 how the power demand value corresponding to the power demand made when the transmission is shifted, out of various power demands, varies. The power demand value corresponding to the power demand made when the transmission is shifted may require either a decrease or an increase in power. In FIG. 8, (a) shows the trend of an power demand value for reducing the power and (b), that of the power demand values for raising the power when shifting gears.

Before the start of the shifting of the transmission (before timing t1), a demand for reducing the power is made to reduce the engine power. At this time, as indicated by a solid line in FIG. 8 (a), the power demand value for reducing the power when shifting gears, after being gradually reduced toward the predetermined level to match the demand for reducing the power, is held constant at this predetermined level. After the shifting of the transmission is completed (timing t2), a demand for raising the power is made to boost the engine power. At this time, as indicated by a solid line in FIG. 8 (b), the power demand value for raising the power when shifting gears gradually increases to match the power demand for raising the power.

When the power control of the internal combustion engine is performed to match the power demand values for reducing the power when shifting gears and the power demand value for raising the power when shifting gears both mentioned above, the engine power is in a reduced state during the shifting of the transmission (from t1 till t2). As a result, the transmission of rotation from the internal combustion engine to the transmission is restrained to prevent obstruction of the shifting of the transmission by that transmission of rotation. As a result, the shifting of the transmission is smoothened. However, if any other power demand than the aforementioned power demand when shifting gears is made when the transmission is shifted, priority will be given to power control to achieve an power to meet that other power demand depending on the power demand value corresponding to that power demand.

If, for instance, when the power demand value for reducing the power when shifting gears is reduced toward a predetermined level as indicated by the solid line in FIG. 8 (a), another demand for reducing the power than that when shifting gears is made, the power demand value corresponding to this other demand for reducing the power may be lower than the power demand value for reducing the power when shifting gears. In such a case, the other demand value for reducing the power than that when shifting gears is set as the target power on condition that it is the lowest of all the power demand values for reducing the power, and power control of the internal combustion engine is performed on the basis of that target power. As a result, priority is given to power control to meet that other demand for reducing the power over power control to meet the power demand for reducing the power when shifting gears.

When the power demand value for raising the power when shifting gears is being gradually raised as indicated by the solid line in FIG. 8 (b), another power demand value for reducing or raising the power may be made than the power demand value for raising the power at the time of shifting the transmission.

When, for instance, another demand for raising the power than that when shifting gears is made, the power demand value corresponding to this other demand for raising the power may be higher than the power demand value for raising the power when shifting gears. In such a case, the other power demand values for raising the power than that when shifting gears is set as the target power on condition that it is the highest of all the power demand values for raising the power, and power control of the internal combustion engine is performed on the basis of that target power. As a result, priority is given to power control to meet that other demand for raising the power over power control to meet the power demand for raising the power when shifting gears.

If another demand for reducing the power than the demand for raising the power at the time of shifting the transmission is made, since the smaller of the maximum of the power demand values for raising the power and the minimum of the power demand values for reducing the power is used as the target power, the power demand value for reducing the power corresponding to the demand for reducing the power will be set as the target power. Then, as power control of the internal combustion engine is performed on the basis of this target power, priority is given to power control to meet that other demand for reducing the power over power control to meet the power demand for raising the power when shifting gears.

As described above, when power control to meet an power demand when shifting gears is performed, if another power demand is made, power control to meet that other power demand may be given priority depending on the level of the power demand value corresponding to that other power demand. This prioritized power control causes the engine power when shifting gears to deviate from its optimal level, but this deviation does not substantially affect the transmission of power by the torque converter when shifting gears or other actions, because power transmission (the transmission of rotation) by the torque converter takes place via a fluid, which damps the influence of the deviation of the engine power from its optimal level.

Further in recent years, there has become available for practical use a configuration in which, instead of a torque converter, an automatic clutch which is automatically engaged and disengaged is provided between the internal combustion engine and the transmission to connect and disconnect them when shifting gears (JP-A-2002-144924). This automatic clutch is disengaged before the start of shifting by the transmission to cut off the transmission of rotation between the internal combustion engine and the transmission, and is engaged to connect the internal combustion engine and the transmission after the completion of shifting by the transmission. When the automatic clutch is engaged after the completion of shifting by the transmission, an power demand is made in the direction of raising the power when shifting gears. By performing power control to meet this power demand, the rotation speed of the internal combustion engine is raised to and synchronized with that of the transmission thereby to ease the engaging shock of the automatic clutch. In its engaging process, the automatic clutch is in a slipping state.

Incidentally, if the aforementioned normal power control is applied to an internal combustion engine connected to a transmission through an automatic clutch, there will arise a shock when the automatic clutch is engaged after the completion of shifting by the transmission or a state in which the automatic clutch is slipping when it is engaged will be extended to accelerate the wear of the automatic clutch. The reason for the shock and that for the accelerated wear will be individually explained below.

### [Reason for the shock]

When a demand for raising the power when shifting gears is made, the power demand value corresponding to that demand rises as shown in FIG. 8 (b).
If then another demand for raising the power than the demand for raising the power when shifting gears is made, the power demand value corresponding to that may surpass the power demand value corresponding to the demand for raising the power when shifting gears. In such a case, as noted above, priority is given to power control to meet that other power demand for raising the power over power control to meet the demand for raising the power when shifting gears, and then the engine power may rise more steeply than the optimum state when shifting gears. As a result, the rotation speed of the internal combustion engine would quickly rise to that of the transmission, and the automatic clutch would be engaged. However, when the automatic clutch is engaged in a state in which the rotation speed of the internal combustion engine has steeply risen, the internal combustion engine is connected to the transmission at a high level of the turning torque on the engine side, making it inevitable for an engagement shock to occur.

### [Reason for the accelerated wear]

When the power demand value for raising the power when shifting gears increases as shown in FIG. 8 (b), if another demand for reducing the power than the demand for raising the power when shifting gears is made, power control to meet that other demand for reducing the power will be performed with priority over power control to meet the demand for raising the power when shifting gears. As the rise of the internal combustion engine speed would be made less steep by this prioritized power control, a longer time would be taken by the rotation speed of the engine to become synchronized with that of the transmission and accordingly by the automatic clutch to complete engagement.
However, this delay in the synchronization between the internal combustion engine and the transmission would keep the automatic clutch in a slipping state longer in its engaging process, and thereby accelerate the wear of the automatic clutch.

Document EP 0 037 639 A2 discloses an engine power control for an automatic-shift counter-shaft transmission having a counter-shaft. During the shifting operation, the engine throttle is controlled such that the gears are rotated at the same rotational speed as that of the dog clutches.

Further, document EP 1 223 070 A discloses a method of control for a motor vehicle engine motor-transmission group with an electronically controlled automatic gearbox. The gear ratio changes are controlled by determining, at regular time intervals, a limited torque value as a function of which the changes are performed. The limited torque value is derived from a control torque and the maximum power available at the given engine speed regime.

It is the object of the invention to provide a power control apparatus and a power control method for an internal combustion engine capable of suppressing the occurrence of a shock and the accelerated wear of the automatic clutch in connection with its engagement at the time of shifting the transmission.

The object of the present invention is achieved with a power control apparatus and a power control method having the features of the independent claims.

Further advantageous developments of the invention are subject-matter of the dependent claims.

Other aspects and advantages of the invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
FIG. 1 is a schematic view illustrating an engine to which a power control apparatus according to one embodiment of the inventions applied, a drive system of an automobile mounted with the engine, and the electric configuration of the power control apparatus;
FIG. 2 is a flowchart showing a procedure of computing a target power;
FIG. 3 is another flowchart showing the procedure of computing a target power;
FIG. 4 is still another flowchart showing the procedure of computing a target power;
FIG. 5 (a) through FIG. 5 (h) constitute a time chart showing how power demand values OD and UD, a priority flag F, engine speed NE, input rotation speeds NI, a first counter C1 and a second counter C2 vary at the time of shifting the transmission;
FIG. 6 is a time chart showing the procedure of setting a target power when priority has ended;
FIG. 7 is another time chart showing the procedure of setting the target power when priority has ended; and
FIG. 8 (a) and FIG. 8 (b) constitute a time chart showing variations in power demand values for reducing the power at gear shifting and for raising the power according to the prior art.

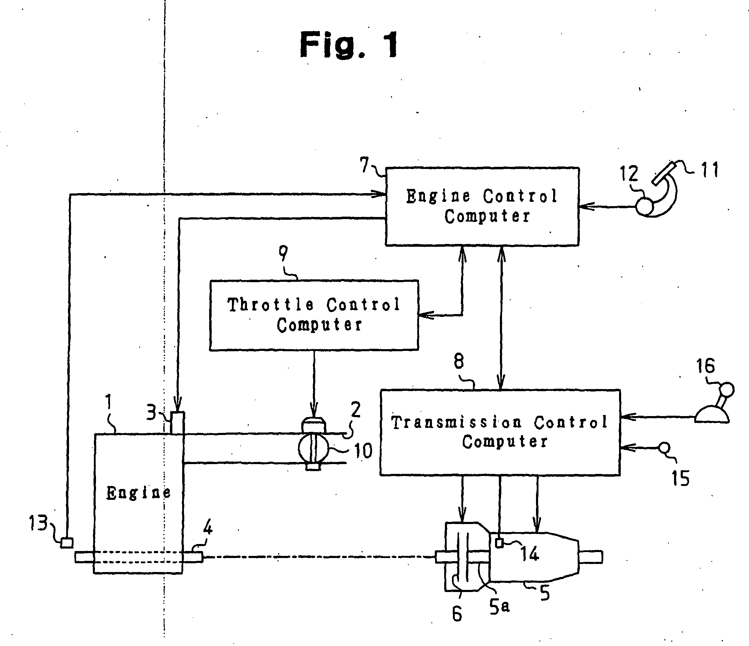

A preferred embodiment of the present invention, in which the invention is applied to a vehicle gasoline engine 1, will be described below with reference to FIG. 1 through FIG. 7.

In the engine 1 shown in FIG. 1, mixture gas of air sucked via an air inlet passage 2 and fuel injected from a fuel injection valve 3 is combusted, and the resultant combustion energy, which is the power shaft of the engine 1, drives a crankshaft 4 to make it turn.

The driving force (power) of the engine 1 is varied by controlling the opening of a throttle valve 10, which is opened or closed to vary the area of air flow through the air inlet passage 2. Thus, when the opening of the throttle valve 10 is altered, the quantity of air intake into the engine 1 varies, and the quantity of fuel injection is controlled accordingly. As a result, the quantity of mixture gas to be combusted is altered to vary the driving force of the engine 1. Therefore, it is possible to perform power control of the engine 1 by controlling the opening of the throttle valve 10.

The driving force of the engine 1 is transmitted to the wheels of the vehicle as rotation of the crankshaft 4 through a transmission 5 and other parts. This transmission 5 has a plurality of speeds, from first to fourth speeds for instance, and is shifted from one speed to another according to the running state of the vehicle or as demanded by the driver. The input shaft 5a of this transmission 5 and the crankshaft 4 of the engine 1 are connected to each other via an automatic clutch 6, which is automatically engaged or disengaged to connect or disconnect them when shifting gears or the like.

To shift the transmission 5, first a state in which the automatic clutch 6 is disengaged to cut off the transmission of rotation between the engine 1 and the transmission 5 is achieved, and in this state the automatic clutch 6 is engaged after an action to shift the transmission 5 is performed. This engagement of the automatic clutch 6 is accomplished while synchronizing the rotation speed of the engine 1 and the rotation speed of the transmission 5 through power control of the engine 1.

Next will be described the electrical configuration of the power control apparatus of the engine 1 in this embodiment of the invention.

This power control apparatus is provided with various computers as stated below.

An engine control computer 7 for performing engine controls including the control of the fuel injection rate in the engine 1.

A transmission control computer 8 for driving and controlling the transmission 5 and the automatic clutch 6.

A throttle control computer 9 for controlling the opening degree of the throttle valve 10.

Into the engine control computer 7 are entered detection signals from, among others, an accelerator position sensor 12 for detecting the degree of stepping down on an accelerator pedal 11 by the vehicle driver and a crank position sensor 13 for supplying a signal corresponding to the rotation of the crankshaft 4. Then, the fuel injection valve 3 is driven through the engine control computer 7 to control the fuel injection rate of the engine 1.

The engine control computer 7 is also connected to the throttle control computer 9. The throttle control computer 9, receiving an instruction from the engine control computer 7, adjusts the opening degree of the throttle valve 10 in accordance with the target opening and factors of the throttle valve 10 on the basis of this instruction.

The engine control computer 7 is further connected to the transmission control computer 8. Into this transmission control computer 8 are entered various signals including one from an input rotation speed sensor 14 for detecting the rotation speed of the input shaft 5a of the transmission 5 (input rotation speed), one from a vehicle speed sensor 15 for detecting the running speed of the vehicle and a signal corresponding to the position of a shift lever 16 manipulated by the driver.

The shift lever 16 is used for switching over the shifting mode of the transmission 5 such as upshifting and downshifting between the automatic mode in which the shifting is automatically accomplished in accordance with the running state of the vehicle or the running requirement and the manual mode in which the shifting is done by the driver's manipulation of the shift lever 16. The shifting of the transmission 5 in the automatic mode takes place automatically on the basis of the vehicle's running speed and the depth to which the accelerator pedal is pressed down and that in the manual mode, according to the driver's manipulation of the shift lever 16.

The transmission control computer 8 shifts the transmission 5 in response to a change in the vehicle's running speed or in the depth to which the accelerator pedal is pressed down in the automatic mode or the driver's manipulation of the shift lever 16 in the manual mode. In that process, a signal matching speed change information indicating the speed from which and that to which the change is to take place (speed change signal) is supplied from the transmission control computer 8 to the engine control computer 7.

The transmission control computer 8 also drives and controls the automatic clutch 6 when the transmission 5 is shifted. It disengages the clutch 6 at the start of gear shift and engages the clutch 6 upon completion of the shifting of the transmission 5. The driving force of this automatic clutch 6 to engage it is adjusted by the transmission control computer 8 on the basis of the deviation of the engine speed NE from the input rotation speed NI among other factors.

Next will be described power control of the engine 1.

Of the engine 1, various power demands are made, and power control is executed to achieve each demanded power. The power demands made of the engine 1 include various power demands cited in the description of the prior art, and there also are a number of others.

An power demand made on the basis of the driver's operation of the accelerator pedal.

An power demand made at the time of shifting the transmission 5.

An power demand for controlling the engine power to restrain skidding due to the driver's abrupt steering or on a slippery road surface, i.e. an power demand in connection with so-called VSC control.

For power control of the engine 1, power demand values corresponding to various power demands are used. Each of these power demand values is set for one or another of power demands, and they can be classified into two kinds, power demand values for raising the power and power demand values for reducing the power. To have these power demand values reflected, a target power RQ is set, and power control of the engine 1 is performed by adjusting the opening of the throttle valve 10 so as to achieve that target power RQ.

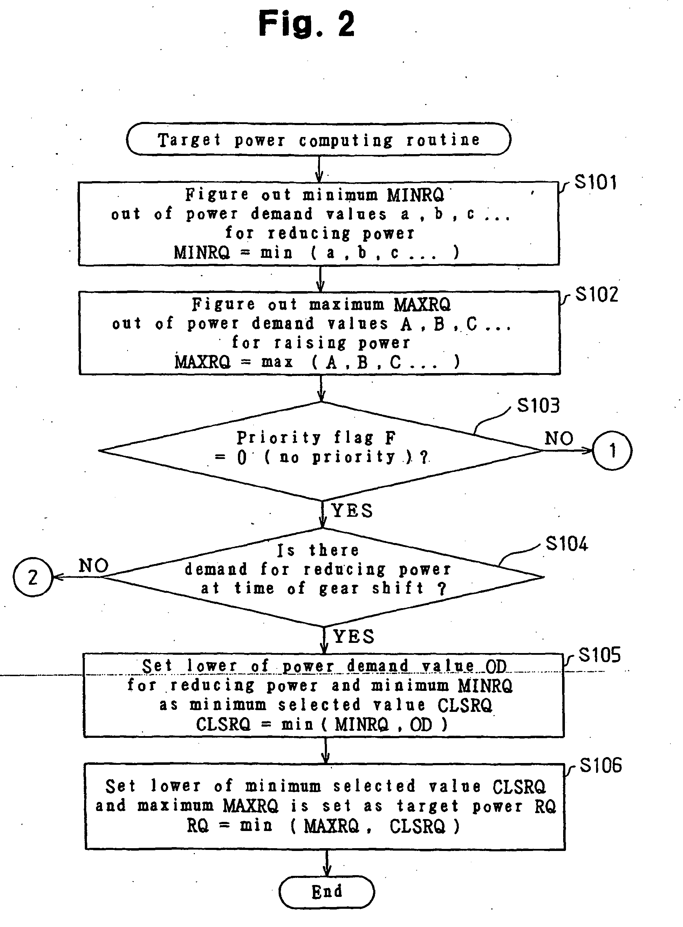

Hereupon, the procedure of computing the target power RQ will be described with reference to the flowcharts of FIG. 2 through FIG. 4 showing the target power computing routine. This target power computing routine is executed through the engine control computer 7 by, for instance, time interrupt at predetermined intervals.

In the target power computing routine, first, the minimum MINRQ out of various power demand values a, b, c ... for reducing the power corresponding to various power demands for reducing the power is figured out (S101 in FIG. 2). The power demand values a, b and c are set to predetermined high levels if there are no power demand for reducing the power corresponding to them or, if there are such power demand for reducing the power, set to low levels corresponding to them.

Then, the maximum MAXRQ out of power demand values A, B, C ... for raising the power corresponding to various power demands for raising the power is figured out (S102). The power demand values A, B, C ... are set to predetermined low levels if there are no power demands for raising the power or, if there are power demands for raising the power, set to high levels corresponding to them.

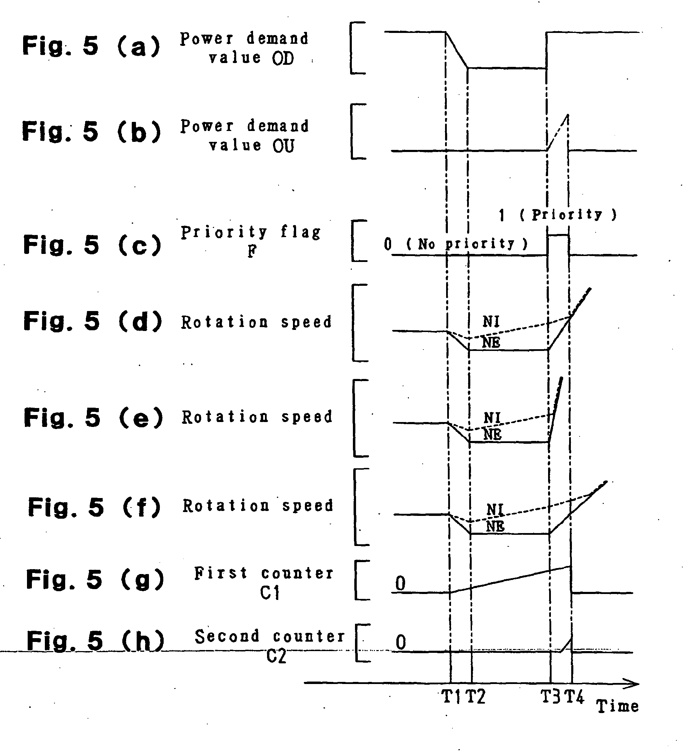

The power demand values a, b, c ... for reducing the power at step S101 do not include the power demand for reducing the power when shifting gears corresponding to the power demand value OD for reducing the power. Nor do the power demand values for raising the power A, B, C ... at step S102 include the power demand value OU for raising the power corresponding to the power demand for raising the power when shifting gears. These power demand value OD for reducing the power and power demand value OU for raising the power when shifting gears vary as shown in FIG. 5 (a) and (b), for instance, when shifting gears.

The power demand value OD for reducing the power is set to a predetermined high level if there is no power demand for reducing the power when shifting gears and, when gear shifting 5 is started, it begins to be gradually reduced to a predetermined level as shown in FIG. 5 (a) (timing T1). After that, when the power demand value OD reaches the predetermined level (timing T2), it is held constant at that level. Therefore, if power control of the engine 1 is performed to match the power demand value OD, as the engine speed NE will drop as shown in FIG. 5 (d), the engine speed NE will be prevented from rising too high along with the disengagement of the automatic clutch 6 after the start of shifting of the transmission 5. Any such excessive rise of the engine speed NE would result from a decrease in the turning resistance of the engine 1 along with the disengagement of the automatic clutch 6.

When the power demand value OD decreases to the predetermined level, shifting of the transmission 5 is started, and this gear shifting causes the rotation speed of the transmission 5 (input rotation speed NI) to vary. The variation of this input rotation speed NI is indicated by a broken line in FIG. 5 (d). Incidentally in this diagram, the variation of the input rotation speed N1 accompanying a gear change for downshifting is shown. Upon completion of the shifting of the transmission 5 (timing T3), then the power demand value OU for raising the power is caused to vary. The power demand value OU for raising the power is set to a predetermined low level when there is no demand for raising the power when shifting gears, and is gradually raised as shown in FIG. 5 (b) after the completion of gear shift. If power control of the engine 1 is performed to match the power demand value OU varying in this way, it will become possible to raise the engine speed NE toward the input rotation speed NI and synchronize them as shown in FIG. 5 (d). Thus the power demand value OU is set as an appropriate level for synchronizing the engine speed NE with the input rotation speed NI.

As described above, when shifting gears, the power demand values OD and OU, which are values corresponding to the power demand at the time, vary as shown in FIG. 5 (a) and (b), respectively, but usually a target power RQ reflecting the aforementioned minimum MINRQ and maximum MAXRQ is set in addition to the power demand values OD and OU, and power control is performed on the basis of this target power RQ. In such a manner of power control, it is so disposed that the demanded power be achieved to meet not only the power demand when shifting gears but other power demands reflecting non-gear shifting factors as well. This way of power control will be hereinafter referred to as normal power control.

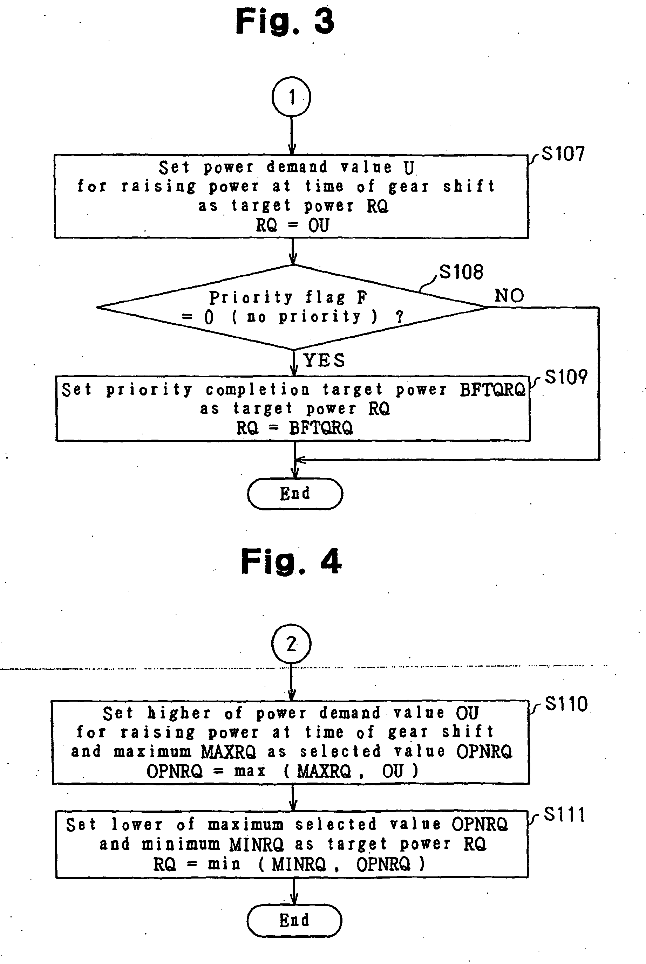

In the target power computing routine, steps S104 through S106(FIG. 2), steps S110 and S111 (both FIG. 4) constitute a sequence of processing to set the target power RQ for use in the normal power control.

In this sequence of processing, first it is judged whether or not there is an power demand for reducing the power when shifting gears (S104 in FIG. 2). At the early stage of shifting the gear, as an power demand for reducing the power for gear shift is made to restrain an excessive rise in the engine speed NE accompanying the disengagement of the automatic clutch 6, an affirmative judgment is given at step S104, and the processing goes ahead to and after step S105. Here is set as the minimum selected value CLSRQ the lower of the power demand value OD for reducing the power and the minimum MINRQ when shifting gears (S105), and further the lower of the minimum selected value CLSRQ and the maximum MAXRQ is set as the target power RQ (S106).

In this case, the power demand value OD for reducing the power when shifting gears, if it is lower than the minimum MINRQ of the power demand values a, b, c ... corresponding to an power demand for reducing the power due to any other factor than gear shifting, will be set as the minimum selected value CLSRQ. Further, on such an occasion, usually an power demand for raising the power is made for some other factor than an power demand when shifting gears, such as an power demand based on the operation of the accelerator pedal. For this reason, the minimum selected value CLSRQ (power demand value OD) becomes lower than the maximum MAXRQ and is set as the target power RQ. Power control based on this target power RQ adjusts the power of the internal combustion engine so as to meet the demand for reducing the power at the early stage of shifting the gear.

Incidentally, if the power demand value OD for reducing the power when shifting gears is higher than the minimum MINRQ, the minimum MINRQ will be set as the minimum selected value CLSRQ . Then, the lower of this minimum selected value CLSRQ (the minimum MINRQ) and the maximum MAXRQ is set as the target power RQ. In this case, power control based on the target power RQ adjusts the power of the engine 1 so as to meet the power demand arising from any non-gear shifting factor.

If no demand for raising the power was made at the early stage of shifting the gear, the maximum MAXRQ will take on a low value, and accordingly the power demand value OD for reducing the power when shifting gears can be higher than the maximum MAXRQ, even if lower than the minimum MINRQ. Then, the maximum MAXRQ is set as the target power RQ, and power control based on the target power RQ adjusts the power of the engine 1 so as to meet the power demand arising from any non-gear shifting factor.

On the other hand, if a negative judgment is given at step S104 and it is determined that there is no power demand for reducing the power when shifting gears, the processing goes ahead to and after step S110 (FIG. 4). Hereupon the higher of the power demand value OU for raising the power when shifting gears and the maximum MAXRQ is set as the maximum selected value OPNRQ (S110), and the lower of the maximum selected value OPNRQ and the minimum MINRQ is set as the target power RQ (S111).

In this case, if no power demand for raising the power when shifting gears is made, since the power demand value OU for raising the power is supposed to be low, the maximum MAXRQ will be higher than the power demand value OU, and set as the maximum selected value OPNRQ. Then, if there is no power demand for reducing the power arising from any non-gear shifting factor, the minimum MINRQ will take on a high level, and accordingly the maximum selected value OPNRQ (the maximum MAXRQ) will be lower than the minimum MINRQ and set as the target power RQ. If at this time there is any demand for reducing the power due to any non-gear shifting factor, as the minimum MINRQ is reduced to a low level to match that demand, the minimum MINRQ will become lower than the maximum selected value OPNRQ (the maximum MAXRQ) and set as the target power RQ. Power control performed on the basis of the target power RQ set as described above adjusts the power of the engine 1 so as to meet the power demand arising from any non-gear shifting factor.

If there is made any demand for raising the power when shifting gears, as the power demand value OU for raising the power will take on a high level matching that demand, conceivably the power demand value OU may become higher than the maximum MAXRQ and be set as the maximum selected value OPNRQ. If at this time no demand for reducing the power is made at all, as the minimum MINRQ will take on a high value, the maximum selected value OPNRQ (the power demand value OU) will become lower than the minimum MINRQ and set as the target power RQ. In this case, power control based on the target power RQ adjusts the power of the engine 1 so as to meet the power demand for raising the power when shifting gears.

The demand for raising the power when shifting gears is made when the engine speed NE is raised to the input rotation speed NI at a late stage of gear shifting so as to engage the automatic clutch 6. To match this demand for raising the power when shifting gears, the power demand value OU for raising the power is gradually raised as shown in FIG. 5 (b). Therefore, when power control is performed on the basis of the target power RQ (the power demand value OU), the engine speed NE rises to become synchronized with the input rotation speed NI as shown in FIG. 5 (d), and at the same time the automatic clutch 6 is engaged. In this engaging process of the automatic clutch 6, the clutch 6 remains in a slipping state until the engine speed NE becomes synchronized with the input rotation speed NI.

However, it is also possible, when the demand for raising the power when shifting gears is made, for a demand for raising the power to arise from any non-gear shifting factor and there is no demand for reducing the power arising from a non-gear shifting factor. In this case, under the normal power control described above, the maximum MAXRQ may become higher than the power demand value OU and set as the maximum selected value OPNRQ, and further the maximum selected value OPNRQ (the maximum MAXRQ) may prove lower than the minimum MINRQ and set as the target power RQ.

When power control on the basis of the target power RQ set as described above is performed, the power of the engine 1 is adjusted to a higher level than the power demand value OU for raising the power when shifting gears, the engine speed NE quickly rises to the input rotation speed NI as shown in FIG. 5 (e), and the automatic clutch 6 is engaged. When the automatic clutch 6 is engaged in such a state in which the engine speed NE has quickly risen, an engagement shock inevitably occurs because the engine 1 is connected to the transmission 5 in a state in which the turning torque on the engine 1 side is great.

Also, when the demand for raising the power when shifting gears is made, a demand for reducing the power may be made for any other reason than gear shifting. Since in such a case the minimum MINRQ becomes lower than the power demand value OU under the normal power control described above, even if the power demand value OU is set as the maximum selected value OPNRQ, the minimum MINRQ will become lower than the maximum selected value OPNRQ (power demand value OU) and set as the target power RQ.

When power control on the basis of the target power RQ set as described above is performed, the power of the engine 1 is adjusted to a lower level than the power demand value OU for raising the power when shifting gears, and the engine speed NE rises only gradually to the input rotation speed NI as shown in FIG. 5 (f). As a result, it takes a longer time for the engine speed NE to rise to and become synchronized with the input rotation speed NI and for the automatic clutch 6 to complete engagement.
When it takes a longer time for the engine speed NE and the input rotation speed NI to become synchronized, the automatic clutch 6 will remain longer in a slipping state in its engaging process, resulting in accelerated wear of the automatic clutch 6.

In view of this problem, in this preferred embodiment of the invention, when the demand for raising the power when shifting gears is made, priority is given to the execution of gear shifting power control to meet the power demand when shifting gears over the normal power control described above.

When a demand for raising the power when shifting gears is made by this prioritized execution of gear shifting power control, even if any other power demand is made, the power of the engine 1 is controlled so as to meet the demand for raising the power when shifting gears. Therefore, it is made possible to restrain the occurrence of a shock at the time of engagement of the automatic clutch 6 or the accelerated wear of the clutch 6 due to a delay in the completion of engagement along with the execution of power control to meet that other power control when a demand for raising the power when shifting gears is made.

In the target power computing routine, the prioritized execution of gear shifting power control can be realized by step S103 (FIG. 2) and step S107 (FIG. 4). By the processing at step S103, it is judged whether or not a priority flag F for judging whether or not control when shifting gears should be given priority is "0 (no priority)". This priority flag F is set to "1 (priority)" as shown in FIG. 5 (c) when a demand for raising the power when shifting gears is made and the power demand value OU for raising the power is raised to a high level to match that demand and when the gear is downshifted. The priority flag F set to "1" is returned to "0 (no priority)" when the engagement of the automatic clutch 6 is completed to end the gear shift, the demand for raising the power is no longer effective and the power demand value OU is reduced to a predetermined low level (timing T4).

If a negative judgment is given at step S103 to the effect of "F = 1 (priority)", the process will go ahead step S107 (FIG. 3). Here the power demand value OU for raising the power when shifting gears is set to be the target power RQ. By performing power control on the basis of the target power RQ so set, the power of the engine 1 is adjusted so as to meet the demand for raising the power when shifting gears. Even if another power demand arising from a non-gear shifting factor is made then, irrespective of the level of the power demand value corresponding to that other demand, the power demand value OU will remain set as the target power RQ, and accordingly power control to meet the demand for raising the power when shifting gears will continue to be performed. Therefore, it is possible to restrain the occurrence of a shock on the automatic clutch 6 or the accelerated wear of the clutch 6 due to a delay in the completion of engagement.

In the target power computing routine, post-processing after the end of the prioritized execution of gear shifting power control is carried out at steps 108 and 109. The prioritized execution of gear shifting power control ends when the demand for raising the power when shifting gears is no longer in effect and the priority flag F returns to "0 (no priority)". When the flag returns to "F = 0 (no priority)", an affirmative judgment is given at step S108, and a priority completion target power BFTQRQ is set as the target power RQ (S109). Therefore, although a negative judgment is later given at step S103 (FIG. 2) and normal power control is started, the initial value of the target power RQ under this control becomes the priority completion target power BFTQRQ.

As this priority completion target power BFTQRQ is used the target power RQ used during the previous execution of normal power control and when power control to meet an power demand for a non-gear shifting factor was performed.
Therefore, as this target power RQ is used as the initial value of the target power RQ at the starting time of the current normal power control and the normal power control is started so that this initial value be obtained, the responsiveness at the time of controlling the power of the engine 1 is improved so as to meet the power demand involving the non-gear shifting factor at an early stage after the start of this control.

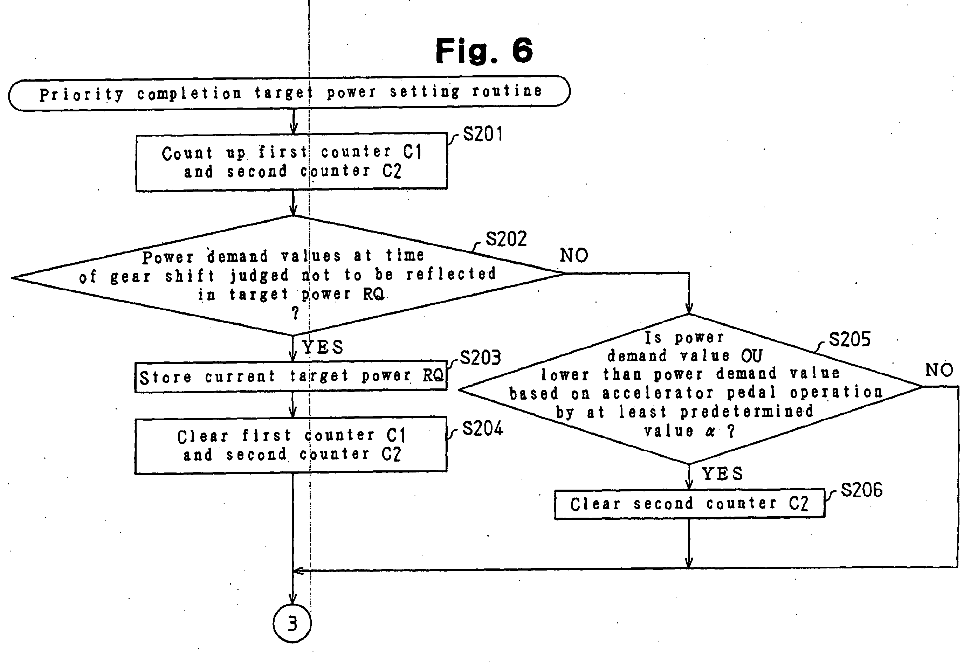

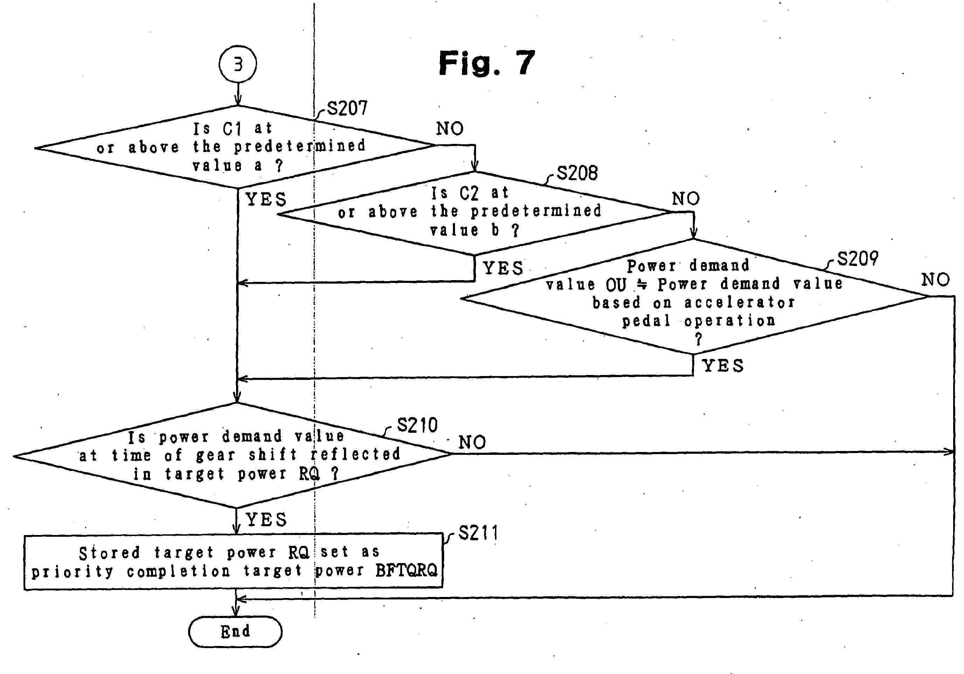

Next will be described the procedure of setting the priority completion target power BFTQRQ with reference to the flowcharts of FIG. 6 and FIG. 7 showing the priority completion target power setting routine. The routine is executed through the engine control computer 7 by, for instance, time interrupt at predetermined intervals.

From steps S201 through S206 (FIG. 6) in the priority completion target power setting routine, the processing of the count of a first counter C1 representing the elapsed time since the start of gear shift and that of a second counter C2 representing the elapsed time in the final phase of gear shift takes place and a target power RQ reflecting any power demand due to any non-gear shifting factor is stored.

Thus at the beginning, the first counter C1 and the second counter C2 are counted up (S201). Then, if the power demand values OD and OU when shifting gears are judged not to be reflected in the target power RQ (YES at S202), in other words normal power control is performed so as to meet any power demand due to any non-gear shifting factor, the process goes ahead to steps S203 and S204. Here, the current target power RQ is stored into the RAM of the engine control computer 7 (5203), and the first counter C1 and the second counter C2 are cleared to "0" (S204).

On the other hand, if the power demand values OD and OU when shifting gears are judged to be reflected in the target power RQ (NO at S202), in other words if power control is performed so as to meet the power demand when shifting gears by normal power control or by gear shifting power control, the process goes ahead to steps S205 and S206. Here, it is judged whether or not the power demand value OU for raising the power when shifting gears is lower than the power demand value based on accelerator pedaling by at least a predetermined value α and, if the judgment is affirmative, the second counter C2 will remain cleared to "0" (S206) until the final phase of gear shift in which the power demand value OU comes close to the power demand value based on accelerator pedaling.

By the processing from S201 through S206 described above, the first counter C1 is counted up from the start to the end of gearshift as shown in FIG. 5 (g), while the second counter C2 is counted up only during the final phase of gear shift as shown in FIG. 5 (h).

At the processing of steps S207 through S211 (FIG. 7) in the priority completion target power setting routine, the priority completion target power BFTQRQ is set.

Thus, first it is judged from steps S207 through S209 whether or not the end of the power demand for raising the power when shifting gears (completion of gear shift) is near on the basis of the results of the judgments listed below.

Whether or not the count of the first counter C1 is at or above the predetermined value a (S207).

Whether or not the count of the second counter C2 is at or above the predetermined value b (S208).

Whether or not the power demand value OU for raising the power when shifting gears has risen to a level substantially equal to the power demand value based on accelerator pedal operation (S209).

If any one of these judgments is affirmative, it will be determined that the gear shift is near completion, and the process will go ahead to steps S210 and S211. Here, subject to the condition that the current power demand value OU is reflected in the target power RQ (YES at S210), the target power RQ stored in the RAM is set as the priority completion target power BFTQRQ (S211). Therefore, the priority completion target power BFTQRQ is set closely before the completion of gear shift.

The priority completion target power BFTQRQ set in this manner is set as the target power RQ at the time when the gear shift is completed by the processing at steps S108 and S109 (FIG. 3) in the target power computing routine and normal power control is started. As a result, the priority completion target power BFTQRQ is made the initial value of the target power RQ for the normal power control.

The preferred embodiment of the present invention hitherto described in detail can provide the following advantages.
(1) In a state in which the automatic clutch 6 is not engaged when shifting gears, when a demand for raising the power is made of the engine 1 to synchronize the engine speed NE with the input rotation speed NI, if the priority flag F is set to "1 (priority)", priority is given to the execution of gear shifting power control to meet that power demand when shifting gears. Thus, the gear shifting power control is executed with priority over normal power control to meet any power demand involving any non-gear shifting factor. Therefore, when a demand for raising the power when shifting gears is made, even if any other power demand is made, power control to meet the demand for raising the power when shifting gears will be performed. Should normal power control to meet that other power demand be performed, the power increase of the engine 1 would become too steep or too gradual in raising the engine speed NE to the input rotation speed NI and synchronizing them. If the power rise of the engine 1 is too steep, the engine speed NE will quickly rise to the input rotation speed NI and the resultant engagement of the automatic clutch 6 will entail a shock. If the power rise of the engine 1 is too gradual, it will take a long time for the engine speed NE to become synchronized with the input rotation speed NI and for the automatic clutch 6 to complete engagement, which would extend the duration of the slipping state of the clutch 6 and accelerate the wear of the automatic clutch 6. However, these problems of the occurrence of an engagement shock or the accelerated wear of the automatic clutch 6 can be solved by prioritized execution of gear shifting power control when a demand for raising the power when shifting gears is made, and the power control is so performed as to meet that demand for raising the power.
(2) It is also subject to the condition that the gear shift is downward that the priority flag F is set to "1 (priority)" in addition to the condition stated above. Therefore, prioritized execution of gear shifting power control takes place when the gear shift is downward. At the time of downshifting the transmission 5, as the rotation speed of the transmission 5 (the input rotation speed NI) rises significantly after the completion of the shifting action, it is necessary to raise the engine speed NE greatly when raising the engine speed NE to, and synchronizing it with, the input rotation speed NI. Therefore, the demand for raising the power of the engine 1 to realize the synchronization of the rotation speeds is correspondingly great. Under such a circumstance, if power control to meet the demand for raising the power side is made impossible to be appropriately performed on account of normal power control performed to meet any power demand involving any non-gear shifting factor, the aforementioned shock and/or accelerated wear in connection with the engagement of the automatic clutch 6 will become greater. However, as the gear shifting power control to meet demand for raising the power when shifting gears is executed with priority over normal power control to meet the power demand involving the non-gear shifting factor, it is made possible to restrain the shock and/or accelerated wear from occurring along with the execution of normal power control.
(3) After the prioritized execution of the gear shifting power control, upon completion of the engagement of the automatic clutch 6 with the engine speed NE being synchronized with the input rotation speed NI, shifting of the transmission 5 is completed. After this completion of shifting of the transmission 5, it is preferable to execute normal power control to meet the power demand involving the non-gear shifting factor with a view to appropriate power control of the engine 1. The priority flag F according to which it is judged whether or not prioritized execution of gear shifting power control is to be done is set from "1 (priority)" to "0 (no priority)" when there is no longer a demand for raising the power when shifting gears along with the completion of shifting of the transmission 5. As the setting of the priority flag F to "0 (no priority)" results in completion of the prioritized execution of the gear shifting power control and the start of normal power control, it is possible to prevent prioritized execution of the gear shifting power control from being continued unnecessarily and thereby to restrain failure to appropriately perform power control of the engine 1.
(4) At the time of the completion of prioritized execution of gear shifting power control and the start of normal power control, the target power RQ which was in effect when the previous normal power control was being executed and power control was performed so as to meet any power demand due to any non-gear shifting factor (the priority completion target power BFTQRQ) is set as the initial value of the target power for the current power control. Since normal power control is started so as to obtain this initial value of the target power, it is made possible to improve the responsiveness of power control of the engine 1 so as to meet any power demand involving the non-gear shifting factor soon after the start of the normal power control.

It should be apparent to those skilled in the art that the present invention may be embodied in many other specific forms without departing from the scope of the invention as defined by the claims. Particularly, it should be understood that the invention may be embodied in the following forms.

When the prioritized execution of the gear shifting power control has been completed and normal power control is to be started, the priority completion target power BFTQRQ is supposed to be set as the target power RQ to serve as the initial value of the target power until the starting time of the normal power control, but such setting of a target power is not always necessary. For instance, in the target power computing routine, steps S108 and S109 (FIG. 3) may be dispensed with, a target power RQ is set immediately after the completion of the gear shifting power control by the processing at steps S105, S106 (FIG. 2), S110 and S111 (FIG. 4), and this may be used as the initial value of the target power at the time of start of the normal power control.

When the prioritized execution of gear shifting power control has ended and normal power control is to start, a predetermined fixed initial value may be set as the target power RQ in place of the priority completion target power BFTQRQ and be used as the initial value of the target power at the time of start of the normal power control.

Although the prioritized execution of gear shifting power control is supposed to be done at the time of downshifting, it may be done at the time of upshifting.

Although gear shifting power control is supposed to be executed with priority when there is a demand for raising the power when shifting gears, prioritized execution of gear shifting power control may be done throughout the process from the start till the end of gear shift.

Although the invention is supposed herein to be applied to gasoline engines, it is applicable to diesel engines as well. In this case, engine power control would be realized by adjusting the fuel injection rate instead of adjusting the throttle opening.

Therefore, the present examples and embodiments are to be considered as illustrative and not restrictive and the invention is not to be limited to the details given herein, but may be modified within the scope and equivalence of the appended claims.

## Claims

1. A power control apparatus of an internal combustion engine (1) that is connected to a transmission (5) through an automatic clutch (6), wherein, when the transmission (5) shifts gears, the automatic clutch (6) selectively connects and disconnects the internal combustion engine (1) and the transmission (5) to and from each other, and wherein the power control apparatus executes power control of the internal combustion engine (1) to meet various power demands, wherein
the power control of the internal combustion engine (1) includes gear shifting power control for achieving power to meet a power demand when the transmission (5) shifts gears, and normal power control for achieving power to meet a power demand reflecting factors including both gear shifting factors and non-gear shifting factors, wherein the power control apparatus further comprises control means (7), and wherein, when the transmission (5) shifts gears, the control means (7) gives priority to the execution of the gear shifting power control over the normal power control,
wherein the power demand when shifting gears includes a power reducing demand and a power raising demand subsequent to the power reducing demand, wherein, when there is the power reducing demand during shifting gears, the control means (7) gives priority to the execution of the normal power control over the gear shifting power control, and when there is the power raising demand during shifting gears, the control means (7) gives priority to the execution of the gear shifting power control over the normal power control.

2. The apparatus according to claim 1, **characterized in that**, at least at the downshift of the transmission (5), the control means (7) gives priority to the execution of the gear shifting power control over the normal power control.

3. The apparatus according to claim 1 or 2, **characterized in that**, when the rotation speed of the internal combustion engine (1) is raised to and synchronized with the rotation speed of the transmission (5) while the control means (7) is giving priority to the execution of the gear shifting power control over the normal power control, the control means (7) ends the prioritized execution of the gear shifting power control.

4. The apparatus according to any one of claims 1 to 3, **characterized in that**, when the normal power control is being executed for achieving power to meet a power demand reflecting factors including non-gear shifting factors, the control means (7) stores a demand value representing the power demand, and wherein, when the prioritized execution of the gear shifting power control is ended, the control means (7) starts the normal power control, using the stored demand value as an initial value of a power demand.

5. A power control method of an internal combustion engine (1) that is connected to a transmission (5) through an automatic clutch (6), wherein, when the transmission (5) shifts gears, the automatic clutch (6) selectively connects and disconnects the internal combustion engine (1) and the transmission (5) to and from each other, the method comprising the steps of:
executing power control of the internal combustion engine (1) to meet various power demands, wherein the power control of the internal combustion engine (1) includes gear shifting power control for achieving power to meet a power demand when the transmission (5) shifts gears, and normal power control for achieving power to meet a power demand reflecting factors including both gear shifting factors and non-gear shifting factors; and
giving priority to the execution of the gear shifting power control over the normal power control when the transmission (5) shifts gears,
wherein the power demand when shifting gears includes a power reducing demand and a power raising demand subsequent to the power reducing demand, wherein, when there is the power reducing demand during shifting gears, priority is given to the execution of the normal power control over the gear shifting power control, and when there is the power raising demand during shifting gears, priority is given to the execution of the gear shifting power control over the normal power control.

6. The method according to claim 5, **characterized in that**, at least at the downshift of the transmission (5), priority is given to the execution of the gear shifting power control over the normal power control.

7. The method according to claim 5 or 6, **characterized in that**, when the rotation speed of the internal combustion engine (1) is raised to and synchronized with the rotation speed of the transmission (5) while priority is being given to the execution of the gear shifting power control over the normal power control, the prioritized execution of the gear shifting power control is ended.

8. The method according to any one of claims 5 to 7, **characterized by**:
storing, when the normal power control is being executed for achieving power to meet a power demand reflecting factors including non-gear shifting factors, a demand value representing the power demand, in control means (7); and
starting the normal power control, using the stored demand value as an initial value of a power demand, when the prioritized execution of the gear shifting power control is ended.

## Patentansprüche

1. Leistungssteuerungsvorrichtung für eine Brennkraftmaschine (1), die durch eine automatische Kupplung (6) mit einem Getriebe (5) verbunden ist, wobei dann, wenn das Getriebe (5) Schaltstufen schaltet, die automatische Kupplung (6) wahlweise die Brennkraftmaschine (1) und das Getriebe (5) miteinander verbindet und diese trennt, und wobei die Leistungssteuerungsvorrichtung eine Leistungssteuerung der Brennkraftmaschine (1) ausführt, um verschiedene Leistungsanforderungen zu erfüllen, wobei
die Leistungssteuerung der Brennkraftmaschine (1) eine Schaltstufenwechselleistungssteuerung zum Erreichen einer Leistung, um eine Leistungsanforderung zu erfüllen, wenn das Getriebe (5) Schaltstufen wechselt, und eine normale Leistungssteuerung zum Erreichen einer Leistung aufweist, um eine Leistungsanforderung zu erfüllen, die Faktoren widerspiegelt, die sowohl Schaltstufenwechselfaktoren als auch schaltstufenwechselunabhängige Faktoren aufweisen, wobei die Leistungssteuerungsvorrichtung ferner eine Steuerungseinrichtung (7) aufweist und wobei dann, wenn das Getriebe (5) Schaltstufen wechselt, die Steuerungseinrichtung (7) eine Priorität an die Ausführung der Schaltstufenwechselleistungssteuerung gegenüber der normalen Leistungssteuerung vergibt,
wobei die Leistungsanforderung, wenn Schaltstufen gewechselt werden, eine Leistungsverringerungsanforderung und eine Leistungserhöhungsanforderung nach der Leistungsverringerungsanforderung aufweist, wobei dann, wenn die Leistungsverringerungsanforderung während einem Wechseln von Schaltstufen vorhanden ist, die Steuerungseinrichtung (7) eine Priorität an die Ausführung der normalen Leistungssteuerung gegenüber der Schaltstufenwechselleistungssteuerung vergibt, und wenn die Leistungserhöhungsanforderung während einem Wechseln von Schaltstufen vorhanden ist, die Steuerungseinrichtung (7) eine Priorität an die Ausführung der Schaltstufenwechselleistungssteuerung gegenüber der normalen Leistungssteuerung vergibt.

2. Vorrichtung nach Anspruch 1, **dadurch gekennzeichnet, dass** wenigstens bei dem Zurückschalten des Getriebes (5) die Steuereinrichtung (7) eine Priorität an die Ausführung der Schaltstufenwechselleistungssteuerung gegenüber der normalen Leistungssteuerung vergibt.

3. Vorrichtung nach Anspruch 1 oder 2, **dadurch gekennzeichnet, dass** dann, wenn die Drehzahl der Brennkraftmaschine (1) auf die Drehzahl des Getriebes (5) erhöht ist und damit synchronisiert ist, während die Steuereinrichtung (7) eine Priorität an die Ausführung der Schaltstufenwechselleistungssteuerung gegenüber der normalen Leistungssteuerung vergibt, die Steuereinrichtung (7) die priorisierte Ausführung der Schaltstufenwechselleistungssteuerung beendet.

4. Vorrichtung nach einem der Ansprüche 1 bis 3, **dadurch gekennzeichnet, dass** dann, wenn die normale Leistungssteuerung zum Erreichen einer Leistung ausgeführt wird, um eine Leistungsanforderung zu erfüllen, die Faktoren widerspiegelt, die schaltstufenwechselunabhängige Faktoren aufweisen, die Steuerungseinrichtung (7) einen Anforderungswert speichert, der die Leistungsanforderung repräsentiert, und wobei dann, wenn die priorisierte Ausführung der Schaltstufenwechselleistungssteuerung beendet ist, die Steuerungseinrichtung (7) die normale Leistungssteuerung startet, unter Verwendung des gespeicherten Anforderungswerts als einen Anfangswert einer Leistungsanforderung.

5. Leistungssteuerungsverfahren einer Brennkraftmaschine (1), die durch eine automatische Kupplung (6) mit einem Getriebe (5) verbunden ist, wobei dann, wenn das Getriebe (5) Schaltstufen wechselt, die automatische Kupplung (6) wahlweise die Brennkraftmaschine (1) und das Getriebe (5) miteinander verbindet und voneinander trennt, wobei das Verfahren die folgenden Schritte aufweist:
Ausführen einer Leistungssteuerung der Brennkraftmaschine (1), um verschiedene Leistungsanforderungen zu erfüllen, wobei die Leistungssteuerung der Brennkraftmaschine (1) eine Schaltstufenwechselleistungssteuerung zum Erreichen einer Leistung, um eine Leistungsanforderung zu erfüllen, wenn das Getriebe (5) Schaltstufen wechselt, und eine normale Leistungssteuerung zum Erreichen einer Leistung ausführt, um eine Leistungsanforderung zu erfüllen, die Faktoren widerspiegelt, die sowohl Schaltstufenwechselfaktoren als auch schaltstufenwechselunabhängige Faktoren aufweisen; und
Vergeben einer Priorität an die Ausführung der Schaltstufenwechselleistungssteuerung über die normale Leistungssteuerung, wenn das Getriebe (5) Schaltstufen wechselt,
wobei die Leistungsanforderung, wenn Schaltstufen gewechselt werden, eine Leistungsverringerungsanforderung und eine Leistungserhöhungsanforderung nach der Leistungsverringerungsanforderung aufweist, wobei dann, wenn die Leistungsverringerungsanforderung während eines Wechselns von Schaltstufen vorliegt, eine Priorität an die Ausführung der normalen Leistungssteuerung über die Schaltstufenwechselleistungssteuerung vergeben wird, und wenn die Leistungserhöhungsanforderung während eines Wechselns von Schaltstufen vorliegt, eine Priorität an die Ausführung der Schaltstufenwechselleistungssteuerung über die normale Leistungssteuerung vergeben wird.

6. Verfahren nach Anspruch 5, **dadurch gekennzeichnet, dass** wenigstens bei dem Herabschalten des Getriebes (5) eine Priorität an die Ausführung der Schaltstufenwechselleistungssteuerung über die normale Leistungssteuerung vergeben wird.

7. Verfahren nach Anspruch 5 oder 6, **dadurch gekennzeichnet, dass** dann, wenn die Drehzahl der Brennkraftmaschine (1) auf die Drehzahl des Getriebes (5) erhöht wird und damit synchronisiert wird, während eine Priorität an die Ausführung der Schaltstufenwechselleistungssteuerung über die normale Leistungssteuerung vergeben ist, die priorisierte Ausführung der Schaltstufenwechselleistungssteuerung beendet wird.

8. Verfahren nach einem der Ansprüche 5 bis 7, **gekennzeichnet durch**:
Speichern eines Anforderungswerts in einer Steuerungseinrichtung (7), der die Leistungsanforderung repräsentiert, wenn die normale Leistungssteuerung zum Erreichen einer Leistung ausgeführt wird, um eine Leistungsanforderung zu erfüllen, die Faktoren widerspiegelt, die schaltstufenwechselunabhängige Faktoren aufweisen; und
Starten der normalen Leistungssteuerung unter Verwendung des gespeicherten Anforderungswerts als einen Anfangswert einer Leistungsanforderung, wenn die priorisierte Ausführung der Schaltstufenwechselleistungssteuerung beendet wird.

## Revendications

1. Appareil de commande de puissance d'un moteur à combustion interne (1) qui est relié à une transmission (5) à travers un embrayage automatique (6), où, lorsque la transmission (5) change des vitesses, l'embrayage automatique (6) connecte et déconnecte au choix le moteur à combustion interne (1) et la transmission (5), et où l'appareil de commande de puissance exécute une commande de puissance du moteur à combustion interne (1) pour satisfaire diverses demandes de puissance, où
la commande de puissance du moteur à combustion interne (1) comporte une commande de puissance lors d'un changement de vitesse pour atteindre une puissance visant à satisfaire une demande de puissance lorsque la transmission (5) change des vitesses, et une commande de puissance normale pour atteindre une puissance afin de satisfaire une demande de puissance reflétant des facteurs y compris des facteurs de changement de vitesse et des facteurs sans changement de vitesse, où l'appareil de commande de puissance comprend en plus un moyen de commande (7), et où, lorsque la transmission (5) change des vitesses, le moyen de commande (7) exécute la commande de puissance de changement de vitesse prioritairement à la commande de puissance normale,
où la demande de puissance lors d'un changement de vitesses comporte une demande de réduction de puissance et une demande d'élévation de puissance subséquente à la demande de réduction de puissance, où, lorsqu'il y a la demande de réduction de puissance lors d'un changement de vitesses, le moyen de commande (7) exécute la commande de puissance normale prioritairement à la commande de puissance lors d'un changement de vitesse, et lorsqu'il y a la demande d'élévation de puissance lors d'un changement de vitesses, le moyen de commande (7) exécute la commande de puissance lors d'un changement de vitesse prioritairement à la commande de puissance normale.

2. Appareil selon la revendication 1, **caractérisé en ce que**, au moins au passage de la transmission (5)sur le rapport inférieur, le moyen de commande (7) exécute la commande de puissance lors d'un changement de vitesse prioritairement à la commande de puissance normale.

3. Appareil selon la revendication 1 ou 2, **caractérisé en ce que**, lorsque la vitesse de rotation du moteur à combustion interne (1) est relevée et synchronisée avec la vitesse de rotation de la transmission (5) tandis que le moyen de commande (7) exécute la commande de puissance lors d'un changement de vitesse prioritairement à la commande de puissance normale, le moyen de commande (7) termine l'exécution prioritaire de la commande de puissance lors d'un changement de vitesse.

4. Appareil selon l'une quelconque des revendications 1 à 3, **caractérisé en ce que**, lorsque la commande de puissance normale est exécutée pour atteindre une puissance visant à satisfaire une demande de puissance reflétant des facteurs y compris des facteurs sans changement de vitesse, le moyen de commande (7) stocke une valeur de demande représentant la demande de puissance, et où, lorsque l'exécution prioritaire de la commande de puissance lors d'un changement de vitesse prend fin, le moyen de commande (7) commence la commande de puissance normale, en utilisant la valeur de demande stockée comme une valeur initiale d'une demande de puissance.

5. Procédé de commande de puissance d'un moteur à combustion interne (1) qui est relié à une transmission (5) à travers un embrayage automatique (6), où, lorsque la transmission (5) change de vitesses, l'embrayage automatique (6) connecte et déconnecte au choix le moteur à combustion interne (1) et la transmission (5), le procédé comprenant les étapes qui consistent :
à exécuter une commande de puissance du moteur à combustion interne (1) pour satisfaire diverses demandes de puissance, où la commande de puissance du moteur à combustion interne (1) comporte une commande de puissance lors d'un changement de vitesse pour atteindre une puissance visant à satisfaire une demande de puissance lorsque la transmission (5) change de vitesses, et une commande de puissance normale pour atteindre une puissance visant à satisfaire une demande de puissance reflétant des facteurs y compris des facteurs de changement de vitesse et des facteurs sans changement de vitesse,
à exécuter la commande de puissance lors d'un changement de vitesse prioritairement à la commande de puissance normale lorsque la transmission (5) change de vitesses,
où la demande de puissance lors d'un changement de vitesses comporte une demande de réduction de puissance et une demande d'élévation de puissance subséquente à la demande de réduction de puissance, où, lorsqu'il y a la demande de réduction de puissance lors d'un changement de vitesses, on exécute la commande de puissance normale prioritairement à la commande de puissance lors d'un changement de vitesse, et lorsqu'il y a la demande d'élévation de puissance lors d'un changement de vitesses, on exécute la commande de puissance lors d'un changement de vitesse prioritairement à la commande de puissance normale.

6. Procédé selon la revendication 5, **caractérisé en ce que**, au moins au passage de la transmission (5)sur le rapport inférieur, on exécute la commande de puissance lors d'un changement de vitesse prioritairement à la commande de puissance normale.

7. Procédé selon la revendication 5 ou 6, **caractérisé en ce que**, lorsque la vitesse de rotation du moteur à combustion interne (1) est relevée et synchronisée avec la vitesse de rotation de la transmission (5) tout en exécutant la commande de puissance lors d'un changement de vitesse prioritairement à la commande de puissance normale, l'exécution prioritaire de la commande de puissance lors d'un changement de vitesse prend fin.

8. Procédé selon l'une quelconque des revendications 5 à 7, **caractérisé par** le fait :
de stocker, lorsque la commande de puissance normale est exécutée pour atteindre une puissance visant à satisfaire une demande de puissance reflétant des facteurs y compris des facteurs sans changement de vitesse, une valeur de demande représentant la demande de puissance, dans le moyen de commande (7) ; et
de commencer la commande de puissance normale, en utilisant la valeur de demande stockée comme une valeur initiale d'une demande de puissance, lorsque l'exécution prioritaire de la commande de puissance lors d'un changement de vitesse prend fin.
